# EUROPÄISCHE PATENTANMELDUNG

(11) **EP 0 947 812 A1**
(43) Veröffentlichungstag der Anmeldung: **06.10.1999**
(21) Anmeldenummer: 98105690.6
(22) Anmeldetag: 28.03.1998
(51) Int. Cl.: G01F 23/284, H01Q 13/02

(54) **Mit Mikrowellen arbeitendes Füllstandsmessgerät**

(71) Anmelder: Endress + Hauser GmbH + Co., 79689 Maulburg (DE)
(72) Erfinder: Hardell, Alexander, 79540 Lörrach (DE); Burger, Stefan, 79108 Freiburg (DE); Oberle, Klaus-Peter, 79809 Weilheim (DE); Wien, Andreas, Dr., 47475 Kamp-Lintfort (DE)

(57) **Zusammenfassung**

Es ist ein mit Mikrowellen arbeitendes Füllstandsmeßgerät, das in der industriellen Meßtechnik einsetzbar ist, eine Abstrahlcharakteristik mit einer ausgeprägten Vorwärtskeule aufweist und zum Senden von Mikrowellen mit einer großen Frequenzbandbreite einsetzbar ist, vorgesehen mit einem Gehäuseabschnitt (13), der als einseitig endseitig durch eine Rückwand (2) kurzgeschlossener Hohlleiter ausgebildet ist, der nahezu vollständig mit einem Einsatz (3, 3a, 3b) aus einem Dielektrikum ausgefüllt ist, einem Erregerelement (5), das in den Gehäuseabschnitt (13) hineinragt und das an eine Mikrowellen-Quelle angeschlossen ist, einer an den Gehäuseabschnitt (13) angrenzenden Antenne (4) zum Senden und/oder Empfangen von Mikrowellen, und einem in dem Einsatz (3, 3a, 3b) zwischen dem Erregerelement (5) und der Antenne (4) angeordneten Spalt (7, 8), der einen für höherere Moden des Hohlleiters im wesentlichen undurchlässigen Filter bildet.

## Beschreibung

Die Erfindung betrifft ein mit Mikrowellen arbeitendes Füllstandsmeßgerät mit einem Gehäuseabschnitt, der als einseitig endseitig durch eine Rückwand kurzgeschlossener Hohlleiter ausgebildet ist, der nahezu vollständig mit einem Einsatz aus einem Dielektrikum ausgefüllt ist, einem Erregerelement, das in den Gehäuseabschnitt hineinragt und das an eine Mikrowellen-Quelle angeschlossen ist, und einer an den Gehäuseabschnitt angrenzenden Antenne zum Senden und/oder Empfangen von Mikrowellen.

Bei der Füllstandsmessung werden Mikrowellen mittels der Antenne zur Oberfläche eines Füllguts gesendet und die an der Oberfläche reflektierten Echowellen empfangen. Es wird eine die Echoamplituden als Funktion der Entfernung darstellende Echofunktion gebildet, aus der das wahrscheinliche Nutzecho und dessen Laufzeit bestimmt werden. Aus der Laufzeit wird der Abstand zwischen der Füllgut-Oberfläche und der Antenne bestimmt.

Es können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse, im folgenden als Wellenpakete bezeichnet, gesendet, die von der Füllgut-Oberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude eines in einem bestimmten Abstand von der Antenne reflektierten Echos.

Beim FMCW-Verfahren wird eine kontinuierliche Mikrowelle gesendet, die periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Mit Mikrowellen arbeitende Füllstandsmeßgeräte werden in sehr vielen Industriezweigen, z.B. in der Chemie oder in der Lebensmittelindustrie, eingesetzt. Typischerweise ist der Füllstand in einem Behälter zu messen. Diese Behälter weisen üblicherweise eine Öffnung auf, an der ein Stutzen oder ein Flansch zur Befestigung von Meßgeräten vorgesehen ist.

In der industriellen Meßtechnik werden regelmäßig dielektrische Stabantennen und Hornantennen zum Senden und/oder Empfangen eingesetzt. Typischerweise wird ein Gehäuse verwendet, das einen Gehäuseabschnitt aufweist, der die Geometrie eines kurzgeschlossenen Hohlleiters besitzt. In dieses ist ein Erregerelement eingeführt, über das Mikrowellen durch den Gehäuseabschnitt hindurch gesendet und/oder empfangen werden. Bei einer Hornantenne schließt sich an das Gehäuse ein trichterförmiger in behälterzugewandter Richtung sich aufweitender das Horn bildender Abschnitt an. Im Fall der Stabantenne ist ein in den Behälter weisender Stab aus einem Dielektrikum vorgesehen.

Üblicherweise ist der Innenraum des Gehäuse von einem Einsatz aus einem Dielektrikum nahezu vollständig ausgefüllt. Im Fall der Hornantenne weist der Einsatz ein kegelförmiges in den Behälter weisendes Ende auf. Bei Stabantennen schließt sich an den Einsatz die stabförmige Antenne an.

Elektromagnetische Wellen breiten sich in Koaxialleitungen im transversal-elektro-magnetischen Mode (TEM-Mode) dispersionsfrei aus. Dieser Feldmode eignet sich daher besonders gut zum Transport von Wellenpaketen oder elektromagnetischen Wellen, die ein Frequenzspektrum mit endlicher, häufig sogar sehr großer, Bandbreite aufweisen. Der Vorteil der dispersionsfreien Ausbreitung ist besonders dann wichtig, wenn die zu sendenden Wellen oder Wellenpakete die erwähnte Bandbreite ihrer Frequenzen aufweisen. Eingespeiste Wellenpakete erfahren dann praktisch keine Verbreiterung, und bei linear frequenzmodulierten Mikrowellen wird eine Linearitätsabweichung weitgehend vermieden.

Zum gerichteten Senden von elektromagnetischen Wellen mittels einer Antenne sind jedoch solche Moden besser geeignet, die eine Abstrahlcharakteristik mit einer ausgeprägten Vorwärtskeule aufweisen. Diese Eigenschaft weist z.B. der in Rundhohlleitern ausbreitungsfähige Grundmode, der transversal elektrische 11-Mode (TE-11), auf. Die erforderliche Modenwandlung, z.B. vom TEM-Mode in den TE-11 Mode, erfolgt durch die Einkopplung mittels des Erregerelements in den kurzgeschlossenen Hohlleiter.

In der DE-U 94 12 243 ist ein mit Mikrowellen arbeitendes Füllstandsmeßgerät beschrieben mit
- einem Gehäuseabschnitt,
   -- der als einseitig endseitig durch eine Rückwand kurzgeschlossener Hohlleiter ausgebildet ist,
   -- der nahezu vollständig mit einem Einsatz aus einem Dielektrikum ausgefüllt ist,
- einem Erregerelement,
   -- das in den Gehäuseabschnitt hineinragt und
   -- das an eine Mikrowellen-Quelle angeschlossen ist, und
- einer an den Gehäuseabschnitt angrenzenden Antenne zum Senden und/oder Empfangen von Mikrowellen.

Das Erregerelement ist hier ein seitlich in den Hohlleiter eingeführter Sendepilz. Bei einer solchen asymmetrischen Anordnung werden in einem Rundhohlleiter neben dem gewünschten Grundmode TE-11 auch höhere Moden angeregt.

In der EP-A 821 431 ist ebenfalls ein mit Mikrowellen arbeitendes Füllstandsmeßgerät beschrieben mit
- einem Gehäuseabschnitt,
   -- der als einseitig endseitig durch eine Rückwand kurzgeschlossener Hohlleiter ausgebildet ist,
   -- der nahezu vollständig mit einem Einsatz aus einem Dielektrikum ausgefüllt ist,
- einem Erregerelement,
   -- das in den Gehäuseabschnitt hineinragt und
   -- das an eine Mikrowellen-Quelle angeschlossen ist, und
- einer an den Gehäuseabschnitt angrenzenden Antenne zum Senden und/oder Empfangen von Mikrowellen.

Das beschriebene Erregerelement ist ein Sendedraht, dessen beiden Enden an der Rückwand des Abschnitts des Gehäuses angeordnet sind und der drei gerade Segmente aufweist, von denen eines im wesentlichen parallel zur Rückwand verläuft.

Diese Form der Einkopplung stellt hinsichtlich der gewünschten Moden eine deutliche Verbesserung gegenüber der zuvor beschriebenen seitlichen Einkopplung dar, aber auch hier wird noch ein wenn auch sehr geringer Anteil höherer Moden erzeugt. Dies macht sich insbesondere beim Pulsradar bemerkbar, wenn dort sehr kurze Pulse erzeugt werden. Je kürzer ein Puls ist, desto größer ist die Bandbreite der darin enthaltenen Frequenzen.

Die Ausbildung höherer Moden führt zwangsläufig zu verstärktem auftreten von Dispersionseffekten im Hohlleiter. Dispersion ist bei einer vorgegebenen Frequenz bei höheren Moden sehr viel stärker ausgeprägt als bei der Grundmode.

Höhere Moden weisen regelmäßig eine ungeeignete Abstrahlcharakteristik auf und stören die Richtcharakteristik der Antenne.

Ein weiterer Nachteil besteht darin, daß der höhere TM-01 Mode im Vergleich zum Grundmode eine große Nachschwing- bzw. Abklingdauer aufweist. Dies führt z.B. beim Pulsradar dazu, daß ein Sendepuls erst nach einem relativ großen Zeitraum abgeklungen ist. Ein Echo, daß in diesen Zeitraum fällt, ist nur dann erkennbar, wenn dessen Amplitude die Amplitude des abklingenden Sendepulses deutlich übersteigt. Durch diesen Zeitraum ist eine räumliche Mindestdistanz vorgegeben, die zwischen dem Meßgerät und dem zu messenden Füllstand bestehen muß. Wird diese räumliche Mindestdistanz unterschritten, ist eine zuverlässige Messung nicht mehr gewährleistet. Die Mindestdistanz entspricht der Hälfte der Strecke, die elektro-magnetische Wellen während des genannten Zeitraums zurücklegen und wird üblicherweise als Blockdistanz bezeichnet.

Es ist daher eine Aufgabe der Erfindung, ein mit Mikrowellen arbeitendes Füllstandsmeßgerät anzugeben, daß in der industriellen Meßtechnik einsetzbar ist, eine Abstrahlcharakteristik mit einer ausgeprägten Vorwärtskeule aufweist und zum Senden und/oder Empfangen von Mikrowellen mit einer großen Frequenzbandbreite einsetzbar ist.

Hierzu besteht die Erfindung in einem mit Mikrowellen arbeitenden Füllstandsmeßgerät mit
- einem Gehäuseabschnitt,
   -- der als einseitig endseitig durch eine Rückwand kurzgeschlossener Hohlleiter ausgebildet ist,
   -- der nahezu vollständig mit einem Einsatz aus einem Dielektrikum ausgefüllt ist,
- einem Erregerelement,
   -- das in den Gehäuseabschnitt hineinragt und
   -- das an eine Mikrowellen-Quelle angeschlossen ist,
- einer an den Gehäuseabschnitt angrenzenden Antenne zum Senden und/oder Empfangen von Mikrowellen, und
- einem in dem Einsatz zwischen dem Erregerelement und der Antenne angeordneten Spalt,
   -- der einen für höherere Moden des Hohlleiters im wesentlichen undurchlässigen Filter bildet.

Gemäß einer ersten Ausgestaltung der Erfindung verläuft der Spalt parallel zu einer Längsachse des Gehäuseabschnitts und weist eine Länge auf, die gleich einem ungradzahligen Vielfachen eines Viertels einer Wellenlänge einer Grundmode des Hohleiters mit dem Spalt und dem Dielektrikum ist.

Gemäß einer zweiten Ausgestaltung verläuft der Spalt senkrecht zur Längsachse des Gehäuseabschnitts und weist eine Breite b auf, die so bemessen ist, daß ein höherer Mode beim Durchgang durch den Spalt eine nahezu vollständige Dämpfung erfährt.

Gemäß einer dritten Ausgestaltung sind in dem Einsatz zwischen dem Erregerelement und der Antenne zwei in Längsrichtung hintereinander angeordnete Spalte vorgesehen, von denen einer parallel und einer senkrecht zur Längsachse des Gehäuseabschnitts verläuft.

Gemäß einer weiteren Ausgestaltung ist das Erregerelement ein an der Rückwand befestigter Sendedraht.

Gemäß einer weiteren Ausgestaltung ist das Erregerelement in einem an die Rückwand angrenzenden Bereich des Spalts angeordnet.

Ein Vorteil der Erfindung besteht darin, daß keine zusätzlichen Bauteile erforderlich sind. Für industrielle Anwendungen geeignete Füllstandsmeßgeräte weisen regelmäßig einen Einsatz aus einem Dielektrikum auf, das den Hohlleiter nahezu vollständig ausfüllt. Dieses dient zum mechanischen Schutz des Erregerelements und verhindert ein Eindringen von Schmutz oder eine Bildung von Kondensat im Gehäuseabschnitt.

Als Dielektrika sind z.B. Fluorkunststoffe, insb. Polytetrafluorethylen (PTFE), oder Polyphenylensulfid (PPS) geeignet. Diese Werkstoffe eignen sich gut für eine mechanische Bearbeitung, so daß ein Spalt ohne großen Aufwand erzeugbar ist. Dient der Spalt gleichzeitig zur Aufnahme des Erregerelements, so ist noch nicht einmal ein zusätzlicher Arbeitsgang erforderlich. Es muß lediglich eine zur Aufnahme des des Erregerelements vorgesehen Ausnehmung verlängert bzw. vergrößert werden.

Die Erfindung und weitere Vorteile werden nun anhand der Figuren der Zeichnung, in denen zwei Ausführungsbeispiele eines mit Mikrowellen arbeitenden Füllstandsmeßgeräts dargestellt sind, näher erläutert; gleiche Teile sind in den Figuren mit gleichen Bezugszeichen versehen.
- Fig. 1 zeigt: einen Längsschnitt durch ein mit Mikrowellen arbeitendes Füllstandsmeßgerät bei dem ein Spalt parallel zur Längsachse eines Gehäuseabschnitts verläuft;
- Fig. 2 zeigt: einen Längsschnitt durch den Einsatz und die Antenne von Fig. 1;
- Fig. 3 zeigt: einen Schnitt durch den Einsatz von Fig. 1 und den Verlauf der elektrischen Feldlinien der Grundmode TE-11 in der Schnittebene;
- Fig. 4 zeigt: einen Schnitt durch den Einsatz von Fig. 1 und den Verlauf der elektrischen Feldlinien der nächsthöheren Mode TM-01 in der Schnittebene;
- Fig. 5 zeigt: einen Längsschnitt durch ein mit Mikrowellen arbeitendes Füllstandsmeßgerät bei dem ein Spalt senkrecht zur Längsachse eines Gehäuseabschnitts verläuft;
- Fig. 6 zeigt: die Antenne und ein Element des Einsatzes von Fig. 5;
- Fig. 7 zeigt: einen Längsschnitt durch das erste Element von Fig. 5; und
- Fig. 8 zeigt: eine Ansicht des ersten Elements von Fig. 5.

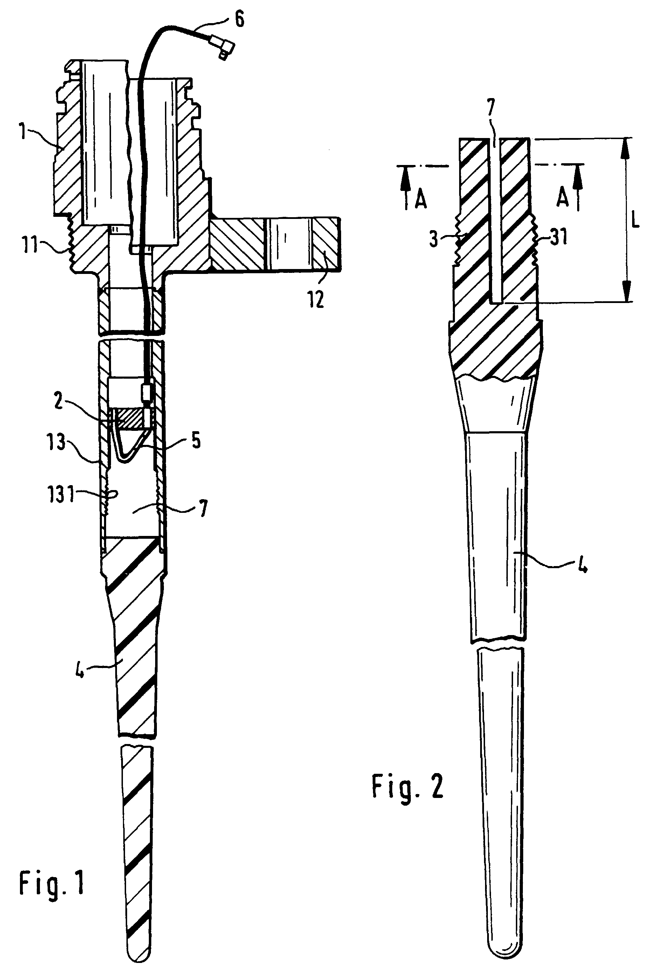

Fig. 1 zeigt ein mit Mikrowellen arbeitendes Füllstandsmeßgerät. Das Gerät ist an einem Meßort, z.B. auf einem Behälter, zu befestigen. Hierzu weist es ein Gehäuse 1 mit einer Befestigungsvorrichtung auf. Dies ist z.B., wie in der linken Hälfte von Fig. 1 dargestellt ein Außengewinde 11, mittels dessen das Gerät in eine entsprechende Behälteröffnung einschraubbar ist. Genausogut kann das Gerät mittels eines Flanschs 12, am Meßort befestigt sein. Dies ist in der rechten Hälfte von Fig. 1 dargestellt. Andere Befestigungsarten sind ebenfalls einsetzbar.

Das Gehäuse 1 weist einen Gehäuseabschnitt 13 auf, der als ein einseitig endseitig durch eine Rückwand 2 kurzgeschlossener Hohlleiter ausgebildet ist. Im montierten Zustand weist eine von der Rückwand 2 entfernte Öffnung des Gehäuseabschnitts 13 in den Behälter hinein in Richtung eines Füllguts, dessen Füllstand zu messen ist. In dem gezeigten Ausführungsbeispiel ist das Gehäuse 1 im wesentlichen zylindrisch und der Gehäuseabschnitt 13 stellt einen Rundhohlleiter dar.

Der Gehäuseabschnitt 13 ist nahezu vollständig mit einem Einsatz 3 aus einem Dielektrikum ausgefüllt. Fig. 2 zeigt eine Ansicht des Einsatzes 3. Als Werkstoff ist hier vorzugsweise ein Werkstoff vorzusehen, der aufgrund dessen chemischer und mechanischer Beständigkeit für industrielle Anwendungen geeignet ist, wie z.B. Polyphenylensulfid (PPS) oder ein Fluorkunststoff. Unter einem Fluorkunststoff wird ein fluorhaltiges Polymerisat, d.h. ein Polymer mit hohem Fluoranteil, verstanden. Vorzugsweise ist der Fluorkunststoff Polytetrafluorethylen (PTFE). Ebenfalls sehr gut geeignet sind Modifikationen von Polytetrafluorethylen (PTFE), bei denen Polytetrafluorethylen (PTFE) als Grundsubstanz dient. Beispiele hierfür sind Tetrafluorethylen-Hexafluorpropylen-Copolymerisat (FEP) und Perfluoralkoxy-Copolymerisat (PFA)

An den Gehäuseabschnitt 13 grenzt eine Antenne 4 zum Senden und/oder Empfangen von Mikrowellen an. In den Ausführungsbeispielen ist dies eine Stabantenne aus einem Dielektrikum, die im montierten Zustand in den Behälter in Richtung des zu messenden Füllstandes weist. Andere Antennenformen, z.B. die eingangs beschriebenen Hornantennen, sind ebenfalls einsetzbar. Wie aus Fig. 2 ersichtlich, sind der Einsatz 3 und die Antenne 4 ein einziges im wesentlichen zylindrisches Bauteil. Der Einsatz 3 weist ein Außengewinde 31 auf, mittels dessen er in ein in dem Gehäuseabschnitt 13 angeordnetes Innengewinde 131 einschraubbar ist.

Es ist ein Erregerelement 5 vorgesehen, das in den Gehäuseabschnitt 13 hineinragt und das an eine in der Figur nicht dargestellte Mikrowellen-Quelle über eine Koaxialleitung 6 angeschlossen ist. Die Mikrowellen-Quelle ist beispielsweise ein Pulsradar-Gerät, ein FMCW-Gerät oder ein kontinuierlich schwingender Mikrowellen-Oszillator.

Das Erregerelement 5 ist ein an der Rückwand 2 des Gehäuseabschnitts 13 befestigter Sendedraht. Ein solches Erregerelement ist in der DE-A 196 29 593 beschrieben.

Der Sendedraht besteht aus einem leitfähigen Metall, z.B. aus Messing, Kupfer, Silber oder Aluminium. Ein erstes Ende des Sendedrahts ist elektrisch leitend mit dem Innenleiter der Koaxialleitung 6 verbunden. Hierzu ist eine isolierte Durchführung in der Rückwand 2 vorgesehen. Ein Außenleiter der Koaxialleitung 6 ist elektrisch leitend mit der Rückwand 2 verbunden. Das zweite Ende des Sendedrahts ist elektrisch leitend mit der Rückwand 2 verbunden. Der Sendedraht weist drei Bereiche auf, einen geraden von der Rückwand 2 der Antenne 4 beabstandet verlaufenden Abschnitt und zwei daran angrenzende vom Abschnitt zu den Enden führende Schenkel. Zur Erzeugung der gewünschten Grundmode TE-11 ist der mitttlere Abstand zwischen dem Abschnitt des Sendedrahts und der Rückwand 2 so zu wählen, daß er gleich einem Viertel der Hohlleiter-Wellenlänge λ_{H} des TE-11-Modes in dem Rundhohlleiter ist.

Für die Bestimmung dieser Hohlleiter-Wellenlänge λ_{H} ist eine relevante Frequenz der zu sendenden Mikrowellen zu verwenden. Die relevante Frequenz ist bei Verwendung eines Pulsradar-Gerät gleich einer Mittenfrequenz eines Frequenzspektrums des Sendepulses und bei Verwendung eines linear frequenzmodulierten FMCW-Gerät gleich dessen Mittenfrequenz.

Es ist bei diesem Erregerelement 5 möglich einen Frequenzbereich für die Mikrowellen zuzulassen, der größer ist, als der Frequenzbereich, in dem bei gegebenen Abmessungen allein der TE-11-Mode ausbreitungsfähig ist, ohne daß der nächsthöhere TM-01-Mode erzeugt und gesendet wird.

Vollständig unterdrücken lassen sich höhere Mode jedoch auch bei dieser Art der Einkopplung von Mikrowellen insbesondere dann nicht, wenn die Frequenzen der Mikrowellen eine sehr große Bandbreite aufweisen.

Erfindungsgemäß ist daher in dem Einsatz 3 zwischen dem Erregerelement 5 und der Antenne 4 ein Spalt 7 angeordnet, der einen für höhere Moden des Hohlleiters undurchlässigen Filter bildet. Wie aus Fig. 2 ersichtlich verläuft der Spalt 7 parallel zu einer Längsachse des Gehäuseabschnitts 13 und grenzt an die Rückwand 2 an. Das Erregerelement 5 ist in einem an die Rückwand angrenzenden Bereich des Spalts 7 angeordnet. Es ist an der Rückwand 2 so befestigt, daß es in den Spalt 7 hineinragt.

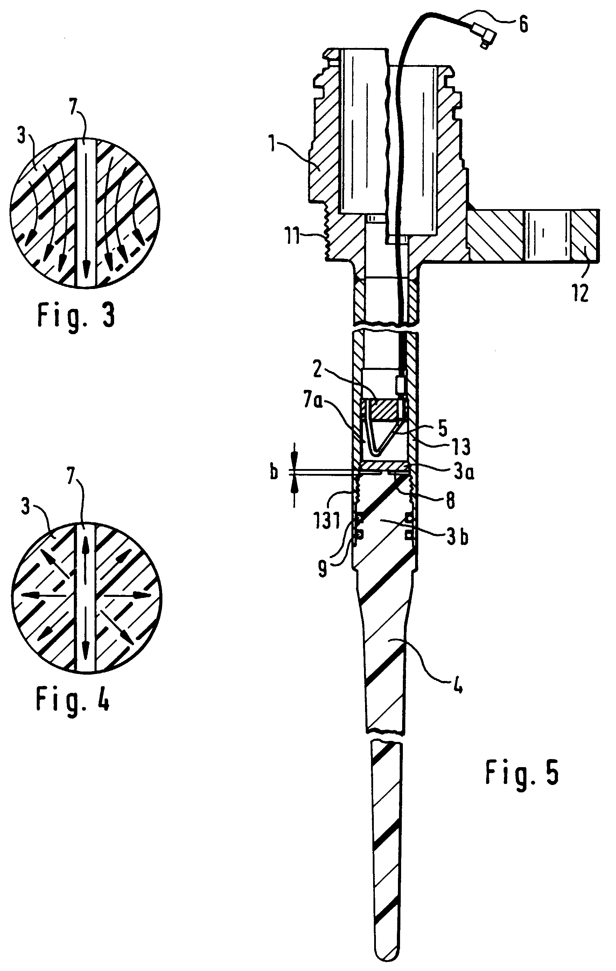

Die Figuren 3 und 4 zeigen jeweils einen Schnitt durch den Einsatz 3. Die Schnittebene ist in Fig. 2 mit A gekennzeichnet. Der Spalt 7 verläuft in dieser Darstellung diagonal durch die Mitte der kreisförmigen Schnittfläche des Einsatzes 3.

In Fig. 3 sind die elektrischen Feldlinien der Grundmode TE-11 dargestellt, in Fig. 4 die des nächsthöheren Modes TM-01. Die elektrischen Feldlinien der Grundmode TE-11 verlaufen in der Schnittebene im Spalt 7 im wesentlichen parallel zum Spalt 7, während die elektrischen Feldlinien des nächsthöheren Modes TM-01 von der Mitte radial nach außen weisen. Die verschiedene Orientierung der Feldlinien bezogen auf den Spalt 7 bewirkt, das der Einsatz 3 für die beiden Moden verschiedene effektive Dielektrizitätskonstanten aufweist. Hierdurch vergrößert sich der Abstand zwischen den Cutoff-Frequenzen der beiden Moden. Entsprechend ist der Frequenzbereich, in dem nur der gewünschte Grundmode TE-11 ausbreitungsfähig ist, deutlich vergrößert. Unterhalb der durch den Spalt 7 zu einem höheren Frequenzwert hin verschobenen Cutoff-Frequenz für den höheren Mode, ist dieser höhere Mode extrem gedämpft und nicht ausbreitungsfähig.

Simulationsrechnungen und Modellversuche haben gezeigt, daß die Filterfunktion besonders ausgeprägt ist, wenn der Spalt 7 eine Länge L aufweist, die gleich einem ungradzahligen Vielfachen eines Viertels einer Wellenlänge der Grundmode, TE-11, des Hohleiters mit dem Einsatz 3 mit Spalt 7 ist. Dann ist der Übergang vom geschlitzten Hohlleiter zum vollständig mit einem Dielektrikum ausgefüllten Hohlleiter für den Grundmode besonders günstig.

Es ist damit möglich die Abstrahlcharakteristik des Füllstandmeßgeräts deutlich zu verbessern, ohne daß zusätzliche Bauteile erforderlich sind und/oder zusätzlicher Arbeitsaufwand bei der Fertigung anfällt, indem eine ohnehin zur Aufnahme des Erregerelements 5 vorzusehende Ausnehmung in der beschriebenen Spaltform ausgebildet ist.

Auch ist die Nachschwing- bzw. Abklingdauer erheblich reduziert gegenüber einem Füllstandsmeßgerät ohne einen entsprechenden Spalt 7. Ursache hierfür ist, daß der Anteil an Mikrowellen im TM-01 Mode bei Frequenzen nahe der Cutoff-Frequenz dieses Modes aufgrund der Verschiebung der Cutoff-Frequenz zu einem höheren Frequenzwert sehr viel geringer ist. Es ist gerade dieser Anteil, der bei herkömmlichen Füllstandsmeßgeräten zu großen Abklingdauern führt.

Fig. 5 zeigt ein weiteres Ausführungsbeispiel eines mit Mikrowellen arbeitenden Füllstandsmeßgeräts. Es werden nachfolgend lediglich die Unterschiede zu dem in Fig. 1 dargestellten Ausführungsbeispiel näher erläutert. Der wesentliche Unterschied besteht darin, daß ein zweiteiliger Einsatz bestehend aus einem ersten Element 3a und einem zweiten Element 3b verwendet ist. Zwischen dem ersten und dem zweiten Element 3a, 3b ist ein Spalt 8 angeordnet, der senkrecht zur Längsachse des Gehäuseabschnitts 13 verläuft und eine Breite b aufweist, die so bemessen ist, daß ein höherer Mode beim Durchgang durch den Spalt 8 eine nahezu vollständige Dämpfung erfährt. Dabei wird der Effekt ausgenutzt, daß höhere Moden beim Durchgang durch den Spalt 8 in Ausbreitungsrichtung eine stärkere Dämpfung erfahren als der Grundmode.

Im Spalt 8 weisen die Cutoff-Frequenzen des Hohlleiter für den Grundmode und für den nächsthöheren Mode höhere Werte auf als im Dielektrikum. Der Betrag der Differenz der beiden Cutoff-Frequenzen des höheren Modes ist nachfolgend mit Frequenzverschiebung Δν bezeichnet. Ensprechend liegt ein Anteil der Mikrowellen mit Frequenzen die im Dielektrikum oberhalb der Cutoff-Frequenz des höheren Modes und unterhalb der Summe von Cutoff-Frequenz des höheren Modes und der Frequenzverschiebung Δν liegen im Spalt 8 unterhalb der Cutoff-Frequenz des höheren Modes und ist somit extrem gedämpft. Die für die jeweilige Anwendung optimale Breite b kann entweder experimentell durch Variation des Abstandes zwischen dem ersten und dem zweiten Element 3a, 3b oder durch entsprechende Simulationsrechnungen bestimmt werden.

Für Mikrowellenpulse mit einer Mittenfreqenz von ca. 6 GHz und einem mit Polyphenylsulfid (PPS) gefüllten Gehäuseabschnitt 13 mit einem Innendurchmesser von ca. 20 mm weist der Spalt 8 vorzugsweise eine Breite von ca. 1 mm auf.

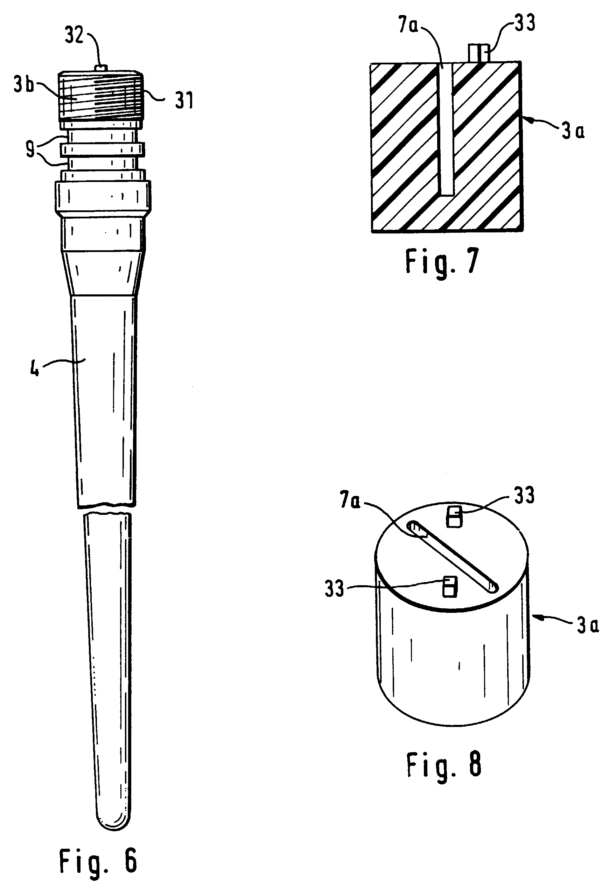

Das zweite Element 3b und die Antenne 4 sind ein einteiliges Bauteil. Eine Ansicht davon ist in Fig. 6 dargestellt. Die Figuren 7 und 8 zeigen einen Längsschnitt und eine Ansicht des ersten Elements 3a.

Das erste Element 3a ist zylindrisch und weist an dessen rückwand-zugewandter Stirnfläche zwei vorstehende Rastnasen 31 auf. Diese sind im montierten Zustand in entsprechenden Ausnehmungen in der Rückwand 2 angeordnet und verhindern eine Drehung des ersten Elements 3a. Diese Maßnahme dient zum Schutz des Erregerelements 5. Eine rückwand-abgewandte Stirnfläche des ersten Elements 3a ist eben.

An das zweite Element 3b ist ein Außengewinde 31 angeformt mittels dessen das zweite Element 3b und die Antenne 4 in den Gehäuseabschnitt 13 einschraubbar sind.
Auf eine dem ersten Element 3a zugewandten Stirnfläche des zweiten Elements 3b ist in der Mitte ein zylindrischer Abstandshalter 32 angeformt. Die Höhe dieses Abstandshalters 32 ist gleich der Breite b des Spalts 8.

Unterhalb des Außengewindes 31 weist das zweite Element 3b zwei ringförmig umlaufende Nuten 9 zur Aufnahme von Dichtungen, z.B. O-Ringen, auf. Nuten und Dichtungen könnten selbstverständlich auch bei dem in Fig. 1 dargestellten Ausführungsbeispiel vorgesehen werden.

Neben dem Spalt 8 der senkrecht zur Längsachse des Gehäuseabschnitts 13 verläuft, weist das in Fig. 5 dargestellte Ausführungsbeispiel einen parallel zur Längsachse des Gehäuseabschnitts 13 verlaufenden Spalt 7a auf. Der Spalt 7a grenzt genau wie der Spalt 7 in dem Ausführungsbeispiel von Fig. 1 direkt an die Rückwand 2 an und dient zur Aufnahme des Erregerelements 5. Die beiden Spalte 7a und 8 sind also in dem Gehäuseabschnitt 13 zwischen dem Erregerelement 5 und der Antenne 4 in Längsrichtung hintereinander angeordnet.

Der Spalt 7a kann selbstverständlich auch entsprechend dem in Fig. 1 dargestellten Spalt 7 eine größere Länge aufweisen und ebenfalls als Filter für höhere Moden ausgebildet sein. Ein solches Füllstandsmeßgerät würde zwei in Längsrichtung hintereinander angeordnete als Filter für höhere Moden dienende Spalte aufweisen.

## Patentansprüche

1. Mit Mikrowellen arbeitendes Füllstandsmeßgerät mit
- einem Gehäuseabschnitt (13),
-- der als einseitig endseitig durch eine Rückwand (2) kurzgeschlossener Hohlleiter ausgebildet ist,
-- der nahezu vollständig mit einem Einsatz (3, 3a, 3b) aus einem Dielektrikum ausgefüllt ist,
- einem Erregerelement (5),
-- das in den Gehäuseabschnitt (13) hineinragt und
-- das an eine Mikrowellen-Quelle angeschlossen ist,
- einer an den Gehäuseabschnitt (13) angrenzenden Antenne (4) zum Senden und/oder Empfangen von Mikrowellen, und
- einem in dem Einsatz (3, 3a, 3b) zwischen dem Erregerelement (5) und der Antenne (4) angeordneten Spalt (7, 8),
-- der einen für höherere Moden des Hohlleiters im wesentlichen undurchlässigen Filter bildet.

2. Mit Mikrowellen arbeitendes Füllstandsmeßgerät nach Anspruch 1, bei dem der Spalt (7) parallel zu einer Längsachse des Gehäuseabschnitts (13) verläuft und eine Länge aufweist, die gleich einem ungradzahligen Vielfachen eines Viertels einer Wellenlänge einer Grundmode des Hohleiters mit dem Spalt (7) und dem Dielektrikum ist.

3. Mit Mikrowellen arbeitendes Füllstandsmeßgerät nach Anspruch 1, bei dem der Spalt (8) senkrecht zur Längsachse des Gehäuseabschnitts (13) verläuft und eine Breite b aufweist, die so bemessen ist, daß ein höherer Mode beim Durchgang durch den Spalt (8) eine nahezu vollständige Dämpfung erfährt.

4. Mit Mikrowellen arbeitendes Füllstandsmeßgerät nach Anspruch 1, bei dem in dem Einsatz (3a, 3b) zwischen dem Erregerelement (5) und der Antenne (4) zwei in Längsrichtung hintereinander angeordneten Spalte vorgesehen sind, von denen einer parallel und einer senkrecht zur Längsachse des Gehäuseabschnitts (13) verläuft.

5. Mit Mikrowellen arbeitendes Füllstandsmeßgerät nach einem der vornangehenden Ansprüche, bei dem das Erregerelement (5) ein an der Rückwand befestigter Sendedraht ist.

6. Mit Mikrowellen arbeitendes Füllstandsmeßgerät nach Anspruch 2 und Anspruch 5, bei dem das Erregerelement (5) in einem an die Rückwand (2) angrenzenden Bereich des Spalts (7, 7a) angeordnet ist.
